(19) **Europäisches Patentamt**

**European Patent Office**

**Office européen des brevets**

(11) Veröffentlichungsnummer: **0 210 524 B1**

(12) # EUROPÄISCHE PATENTSCHRIFT

(45) Veröffentlichungstag der Patentschrift: **04.04.90**

(21) Anmeldenummer: **86109629.5**

(22) Anmeldetag: **14.07.86**

(51) Int. Cl.⁵: **H 02 P 1/44**

(54) **Schaltungsanordnung, bei der ein Wechselstromverbraucher mit einer Kondensatoreinheit in Reihe liegt.**

(30) Priorität: **26.07.85 DE 3526897**

(43) Veröffentlichungstag der Anmeldung:
**04.02.87 Patentblatt 87/06**

(45) Bekanntmachung des Hinweises auf die
Patenterteilung:
**04.04.90 Patentblatt 90/14**

(84) Benannte Vertragsstaaten:
**AT CH DE FR GB IT LI NL SE**

(56) Entgegenhaltungen:
**DE-A-2 820 950**
**DE-A-3 206 187**

(73) Patentinhaber: **Siemens Aktiengesellschaft**
**Wittelsbacherplatz 2**
**D-8000 München 2 (DE)**

(72) Erfinder: **Ghosh, Shyamal-Krishna, Dipl.-Ing.**
**Hohenrother Strasse 22**
**D-8740 Bad Neustadt/Saale (DE)**
Erfinder: **Sturm, Emil, Dipl.-Ing.**
**Sandstrasse 22**
**D-8741 Niederlauer (DE)**

**Beschreibung**

Die Erfindung betrifft eine Schaltungsanordnung, bei der mit einem Wechselstromverbraucher eine für Wechselspannungsbetrieb geeignete Kondensatoreinheit in Reihe geschaltet ist.

Derartige Schaltungsanordnungen sind allgemein als Anlaufschaltungen für einphasige Induktionsmotoren bekannt. Als Anlaufkondensatoren werden in der Regel Elektrolyt-Kondensatoren verwendet, da diese Kondensatoren preiswert sind und kurzzeitig mit Wechselspannung betrieben werden können.

Um die Lebensdauer eines solchen Kondensators zu erhöhen, wird in der DE—A—32 06 187 vorgeschlagen, den Kondensator möglichst schnell nach dem Ingangsetzen des Motors wieder abzuschalten. Auf diese Weise ist der Kondensator nur kurzzeitig einer Belastung unterworfen und wird dadurch geschont. Ein solch baldiges Abschalten des Kondensators nach dem Einschalten eines einphasigen Induktionsmotors kann jedoch nachteilige Folgen für den Motor haben. Durch das Abschalten des Kondensators sinkt das Hochlaufmoment, so daß sich ein verlängerter Hochlauf des Motors ergibt, der zu einer starken Erwärmung der Motorwicklung führt. Außerdem kann es zu Störungen während des Anlaufes kommen, wenn der Motor einer wechselnden Belastung unterworfen ist.

In der EP—A—0 212 242, die vom selben Anmelder ausgeht und mit dem gleichen Prioritätstag wie die vorliegende Anmeldung eingereicht wurde, wird das Problem behandelt, wie kostengünstige, für Gleichspannungsbetrieb geeignete Kondensatoren bei einem mit Wechselspannung gespeisten Verbraucher eingesetzt werden können. Dies ist möglich, wenn zwei gepolte Kondensatoren verwendet werden, die direkt oder über den Verbraucher mit ihren gleichnamigen Polen miteinander verbunden sind und ferner jedem Kondensator eine Gleichrichterdiode zugeordnet ist, wobei die Gleichrichterdiode mit ihrer Kathode mit dem Pluspol und mit ihrer Anode mit dem Minuspol des zugehörigen Kondensators verbunden ist.

Der Erfindung liegt die Aufgabe zugrunde, eine Schaltungsanordnung der eingangs beschriebenen Art so auszubilden, daß die Lebensdauer der Kondensatoren erhöht wird, ohne daß irgendwelche Risiken für den Wechselstromverbraucher in Kauf genommen werden müssen.

Die Lösung der gestellten Aufgabe gelingt nach der Erfindung dadurch, daß die Kondensatoreinheit aus zwei direkt oder über den Verbraucher in Reihe liegenden Kondensatoren besteht und daß jedem Kondensator eine Gleichrichterdiode parallelgeschaltet ist, wobei die Gleichrichterdioden in Bezug auf ihre Durchlaßrichtung gegensinnig zu den Kondensatoren parallelgeschaltet sind. Durch die Anordnung von zwei Kondensatoren und die angegebene Art der Parallelschaltung von Gleichrichterdioden zu den Kondensatoren wird das zu einer starken Erwärmung der Kondensatoren führende und damit die Einschaltdauer begrenzende Umladen der Kondensatoren unterbunden. Die zu jedem Kondensator parallelgeschaltete Gleichrichterdiode schließt für diesen jeweils eine Halbwelle kurz, so daß der Kondensator immer nur von einer Halbwelle gleicher Polarität aufgeladen wird. Dadurch, daß die beiden Gleichrichterdioden gegensinnig zu den Kondensatoren parallelgeschaltet sind, wird der eine Kondensator jeweils durch die positive und der andere Kondensator jeweils durch die negative Halbwelle aufgeladen. Da die Kondensatoren somit nicht mehr umgeladen, sondern nur noch auf- und entladen werden, sind die Verluste so weit reduziert, daß gegebenenfalls ein Dauerbetrieb der Kondensatoren möglich ist.

Anhand eines in der Zeichnung dargestellten Ausführungsbeispieles wird der Anmeldungsgegenstand nachfolgend näher beschrieben. Es zeigt:

Fig. 1 eine Schaltungsanordnung, bei der die Kondensatoren über die Hilfswicklung eines einphasigen Induktionsmotors in Reihe liegen und

Fig. 2 eine Schaltungsanordnung, bei der die Kondensatoren direkt in Reihe liegen und mit dem Verbraucher insgesamt eine Reihenschaltung bilden.

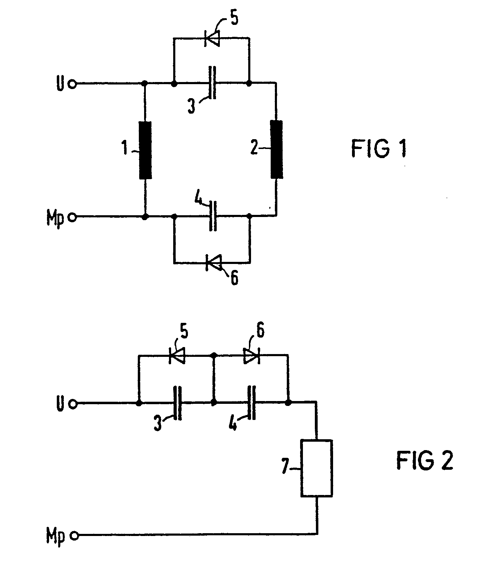

Bei der Schaltungsanordnung nach Fig. 1 ist mit 1 die Hauptwicklung eines einphasigen Induktionsmotors bezeichnet, die an die Netzklemmen U und $M_p$ angeschlossen ist. Parallel zu der Hauptwicklung 1 liegt eine aus der Hilfswicklung 2 und zwei Kondensatoren 3 und 4 bestehende Reihenschaltung an den Netzklemmen U und $M_p$. In dieser Reihenschaltung liegt die Hilfswicklung 2 zwischen den beiden Kondensatoren 3 und 4, verbindet also diese beiden Kondensatoren, die mit ihrem anderen Anschluß an der Netzklemme U bzw. $M_p$ liegen. Zu jedem Kondensator 3 bzw. 4 ist jeweils eine Gleichrichterdiode 5 bzw. 6 parallelgeschaltet. Die beiden Gleichrichterdioden 5 und 6 sind dabei in Bezug auf ihre Durchlaßrichtung gegensinnig zu den Kondensatoren 3 und 4 parallelgeschaltet.

Die Fig. 2 zeigt eine Schaltungsanordnung, bei der die beiden Kondensatoren 3 und 4 direkt in Reihe liegen und mit einem beliebigen Verbraucher 7 in Reihe an die Netzklemmen U und $M_p$ angeschlossen sind. Zu jedem Kondensator 3 bzw. 4 ist jeweils wieder eine Gleichrichterdiode 5 bzw. 6 parallelgeschaltet. Die Gleichrichterdioden 5 und 6 sind dabei in Bezug auf ihre Durchlaßrichtung gegensinnig zu den Kondensatoren 3 und 4 parallelgeschaltet.

Durch die angegebene Art der Parallelschaltung der Gleichrichterdioden 5 und 6 zu den Kondensatoren 3 und 4 wird erreicht, daß jeder Kondensator immer nur von einer Halbwelle gleicher Polarität aufgeladen wird. Während der Halbwelle mit entgegengesetzter Polarität entlädt sich der betreffende Kondensator wieder. Gemäß den Darstellungen in Fig. 1 und 2 wird der Kondensator 3 bei beiden Ausführungsbeispielen jeweils immer nur von der positiven Halbwelle der Wechselspannung aufgeladen. Der Kondensator 4 wird dagegen während der positiven Halbwelle durch die Gleichrichterdiode 6 kurzgeschlossen und kann sich über das Netz entladen. Während der negativen Halbwelle der Wechselspannung wird dagegen der Kondensator 4 geladen und der Kondensator 3 durch die Gleichrichterdiode kurzgeschlossen. Der Kondensator 3 kann sich nunmehr über das Netz entladen. Die Hilfswicklung 2 bzw. der Verbraucher 7 werden dagegen von beiden Halbwellen durchflossen, erhalten somit einen Wechselstrom.

Wie die Ausführungen zeigen, werden die Kondensatoren 3 und 4 stets nur auf- und entladen, es erfolgt somit kein Umladen der Kondensatoren 3 und 4. Die mit dem Umladen verbundenen Verluste und die dadurch bedingte Erwärmung der Kondensatoren entfallen somit. Hierdurch wird die Lebensdauer der Kondensatoren wesentlich erhöht bzw. die Möglichkeit für eine Dauereinschaltung der Kondensatoren geschaffen.

**Patentanspruch**

Schaltungsanordnung, bei der mit einem Wechselstromverbraucher eine für Wechselspannungsbetrieb geeignete Kondensatoreinheit in Reihe geschaltet ist, dadurch gekennzeichnet, daß die Kondensatoreinheit aus zwei direkt oder über den Verbraucher (2) in Reihe liegenden Kondensatoren (3 und 4) besteht und daß jedem Kondensator (3 bzw. 4) eine Gleichrichterdiode (5 bzw. 6) parallelgeschaltet ist, wobei die Gleichrichterdioden (5, 6) in Bezug auf ihre Durchlaßrichtung gegensinnig zu den Kondensatoren (3 und 4) parallelgeschaltet sind.

**Revendication**

Montage dans lequel une unité à condensateurs, convenant pour un fonctionnement avec une tension alternative, est branché en série avec un appareil d'utilisation fonctionnant avec un courant alternatif, caractérisé par le fait que l'unité à condensateurs est constituée de deux condensateurs (3 et 4) branchés directement en série ou par l'intermédiaire de l'appareil d'utilisation (2), et qu'une diode redresseuse (5 ou 6) est branchée en parallèle avec chaque condensateur (3 ou 4), les diodes redresseuses (5, 6) étant branchée en parallèle avec les condensateurs (3 et 4), de telle sorte que leurs sens passants sont opposés.

**Claim**

Circuit arrangement in which a capacitor unit, suitable for alternating voltage operation, is connected in series with an alternating current consumer, characterised in that the capacitor unit consists of two capacitors (3 and 4) lying in series, directly or by way of the consumer (2), and in that a rectifier diode (5 or 6) is connected in parallel to each capacitor (3 or 4), wherein the rectifier diodes (5, 6) are connected in parallel to the capacitors (3 and 4) in the opposite direction relative to their conducting direction.

FIG 1

FIG 2